Europäisches Patentamt

European Patent Office

Office européen des brevets

(19)

(11) **EP 0 613 279 B1**

(12) **EUROPÄISCHE PATENTSCHRIFT**

(45) Veröffentlichungstag und Bekanntmachung des
Hinweises auf die Patenterteilung:
**04.09.2002   Patentblatt 2002/36**

(51) Int Cl.⁷: $H04M\ 3/30$, $H04L\ 12/26$

(21) Anmeldenummer: **94200158.7**

(22) Anmeldetag: **24.01.1994**

(54) **Verfahren zur Extraktion von Daten auf einer Zweidraht-Telephonleitung mit digitalem Datenverkehr und Vorrichtung zur Durchführung des Verfahrens**

Method for data extraction on a two-wire telephone line with digital data traffic and device for execution of this method

Procédé d'extraction de données sur une ligne de téléphone à deux fils avec trafic de données numériques et dispositif d'exécution de ce procédé

(84) Benannte Vertragsstaaten:
**CH DE DK FR GB IT LI NL SE**

(30) Priorität: **04.02.1993   CH 33693**

(43) Veröffentlichungstag der Anmeldung:
**31.08.1994   Patentblatt 1994/35**

(73) Patentinhaber: **ALCATEL**
**75008 Paris (FR)**

(72) Erfinder:
• **Schwyter, Paul**
**CH-8048 Zürich (CH)**
• **Kälin, Ruedi**
**CH-8840 Einsiedeln (CH)**
• **Rickli, Hansueli**
**CH-8910 Affoltern am Albis (CH)**
• **Ernst, Thomas**
**CH-4054 Basel (CH)**
• **Nellen, Josef**
**CH-8617 Mönchaltorf (CH)**
• **Künzler, Rolf**
**CH-8046 Zürich (CH)**

(74) Vertreter: **Schätzle, Albin, Dipl.-Phys. et al**
**Alcatel**
**Intellectual Property Department, Stuttgart**
**70430 Stuttgart (DE)**

(56) Entgegenhaltungen:
**EP-A- 0 111 832          EP-A- 0 200 038**
**EP-A- 0 451 759          EP-A- 0 453 825**
**DE-A- 4 139 265**

**Beschreibung**

Die Erfindung liegt auf dem Gebiet der Ueberprüfung von Telephonverbindungen und betrifft ein Verfahren zur Extraktion von Daten an einer beliebigen Stelle einer Zweidraht-Telephonleitung mit digitalem Datenverkehr und eine Vorrichtung zur Durchführung des Verfahrens.

Zweidraht-Telephonleitungen sind die übliche Verbindung zwischen Teilnehmer-Anschluss und Zentrale. Ueber derartige Leitungen werden heutzutage auch digitale Daten übertragen, sowohl für Sprache als auch andere Informationen, namentlich im Zusammenhang mit ISDN (Integrated Services Digital Network- Integriertes Nachrichtennetz). Es besteht der Bedarf, die Leitung im Betrieb überprüfen zu können, sei es für die Installation, den Unterhalt oder die Ueberwachung. Für den analog übertragenen, unverschlüsselten Sprachverkehr genügte dafür ein hochohmig an die Leitung geklemmter Kopfhörer (Verstärker mit nachgeschaltetem Lautsprecher). Mit der digitalen Datenübertragung ist die Ueberprüfung nicht mehr so einfach möglich.

Ueblicherweise werden die ISDN-Daten vor dem Aussenden verwürfelt. Einem wiederhergestellten Datenstrom ist daher nicht ohne weiteres anzusehen, ob und in welchem Ausmass die Wiederherstellung Fehler aufweist. Da der zur Verwürfelung verwendete Code keine Redundanz aufweist, sind Fehler in der Rekonstruktion der Eingangsfolge, wenn überhaupt, erst bei der Decodierung erkennbar. Eine kleine Fehlerwahrscheinlichkeit bei der Rekonstruktion ist daher unabdingbar. Durch die hohe Datenrate, den Datendurchsatz gemessen in Anzahl Bit pro Sekunde, und die relativ steilen Flanken der Signale wirken sich die spezifischen Uebertragungseigenschaften der Leitung, namentlich die enge Bandbreite, gravierender aus als für die Sprachsignale. Die Signalverzerrungen - die mit höheren Frequenzen stark zunehmende Dämpfung der Leitung ergibt lange Impulsantworten - fallen daher erheblich ins Gewicht.

An den Leitungsenden ist das Problem nicht akut. Teilnehmer- und Zentralen-Anschlussstellen weisen Echokompensatoren auf. Diese adaptieren sich an die angeschlossene Leitung. Die Verzerrungen und Reflexionen werden dadurch kompensiert und sind minimal. Das an der Anschlussstelle gesendete Signal wird, unter Berücksichtigung der Reflexionen, vom Gesamtsignal abgezogen. Für ein Endgerät bleibt im weiteren also nur noch die Aufgabe, einen einzigen Datenstrom mit bekannter Signalamplitude zu verarbeiten.

Nicht so bei der Ueberwachung an der Leitung selbst. Hier können die Signale aus den weiter oben erwähnten Gründen stark unterschiedliche Pegel haben und stark verzerrt sein. Die Leitung wird normalerweise im Voll-Duplex-Modus betrieben, das heisst, die digitalen Daten werden beidseitig gleichzeitig eingespeist; dies allerdings synchronisiert. Es ist nicht möglich, an einer beliebigen Stelle auf der Leitung zu Messzwecken einen Abschluss oder Repeater mit einem Echokompensator dazwischenzuschalten. Dies würde erstens einen störenden Eingriff in die Leitung bedeuten, was den Verkehr behindern oder gar zeitweise verunmöglichen würde, zweitens ergäben sich andere Verhältnisse auf der Leitung, so dass nicht mehr die Leitung in ihrem originalen Zustand überwacht würde.

Es besteht daher die Aufgabe, aus den auf einer Zweidraht-Telephonleitung im Voll-Duplex-Betrieb verkehrenden Signalen an einer beliebigen Stelle die von den zwei Seiten eingespeisten Datenströme zu trennen und als solche zu rekonstruieren, ohne die Leitung zu beeinflussen. Diese Aufgabe wird durch die Schritte des Verfahrens gemäss Patentanspruch 1 und die Merkmale der Vorrichtung zur Durchführung des Verfahrens gemäss Patentanspruch 13 gelöst.

Da die Leitung nicht merkbar beeinflusst werden darf, werden die Signalverläufe mit Hilfe von Strom- und Spannungssonden gemessen und mittels eines Monitors für die nachfolgende Auswertung registriert. In einem gesonderten Verfahrensschritt, der bei Bedarf beliebig wiederholt werden kann, dienen die erfassten Signalverläufe dazu, die Parameter eines Modells der Uebertragungskanäle aus beiden Richtungen festzulegen. Danach erst erfolgt laufend die Verarbeitung der Signalverläufe in Echtzeit. Diese Verarbeitung stützt sich auf an sich bekannte Verfahren der Entscheidungstheorie ab. Wegen der möglichen grossen Pegelunterschiede der Signalanteile von beiden Seiten und der durch die Leitungseigenschaften gegebenen, langen Impulsantworten wäre jedoch eine direkte Verarbeitung in Echtzeit nicht oder nur sehr ungenau möglich. Deshalb stützt sich die Verarbeitung auf die ermittelten Uebertragungskanalmodellparameter ab.

Zur Ermittlung der Uebertragungseigenschaften dienen üblicherweise die Messungen von Ein- und Ausgangssignalen einer Uebertragungsstrecke. Da im vorliegenden Fall die Eingangssignale nicht und die Ausgangssignale nur gemeinsam in überlagerter Form zur Verfügung stehen, muss anders verfahren werden. Erfindungsgemäss wird auf die bekannten Merkmale in Struktur und Inhalt der Daten abgestellt; diese müssen allerdings vorerst aus dem Signalverlauf herausgeholt werden.

Eine weitere Aufgabe besteht also darin, die Eigenschaften der Uebertragungskanäle beidseits der Messstelle allein auf Grund der im Betrieb verkehrenden Daten, welche in Struktur und Inhalt teilweise vorbekannte Merkmale aufweisen, zu ermitteln. Diese Aufgabe wird durch die Verfahrensschritte gemäss Patentanspruch 10 gelöst.

Die bevorzugte Ausgestaltung des Verfahrens benutzt die Eigenschaften der Rahmenstruktur der Daten, wie sie für das ISDN vorgegeben ist. Demgemäss besteht der Datenstrom aus jeweils einem bekannten Synchronsisationswort, gefolgt von Nutzdaten, die zu einer Quasizufallsfolge verwürfelt sind. Die Verwürfelung erfolgt so, dass die Daten eine bekannte Statistik aufweisen, in der Regel sind sie mittelwertfrei und nahezu gleichverteilt, haben also den Charakter von weissem Rauschen. Es ist deshalb möglich, die Nutzdaten wegzufiltern und die Synchronisationswörter zu isolieren. Da die Synchronisationswörter von den Anschlussstellen aus in die beiden Richtungen zeitlich gestaffelt gesendet werden, ist eine Trennung zwischen den beiden Richtungen möglich, die Zuordnung der Richtung jedoch zunächst noch unbestimmt. Aus dem Vergleich der so gewonnenen, typischen Signalverläufe für die Synchronisationswörter und der Kenntnis der ursprünglichen Formen lassen sich die Eigenschaften der Uebertragungskanalabschnitte berechnen, beispielsweise mit Hilfe der Schnellen Fourier-Transformation (FFT).

Für die Verarbeitung der Signalverläufe in Echtzeit eignet sich eine Sequenzrekonstruktion, z. B. in Form eines Viterbi-Detektors. Der Aufwand dafür ist allerdings exponentiell abhängig von der Länge der Impulsantwort, weshalb Vereinfachungen nötig sind. Es bieten sich hauptsächlich zwei Verfahren an.

Das eine beruht auf der kombinierten Sequenzrekonstruktion für die Eingangsdaten beider Seiten, wobei die gemessenen oder/und vorläufig rekonstruierten Signalverläufe auf Grund der Uebertragungskanalmodellparameter Kompensationsanteile generieren, die intern zurückgeführt werden, wodurch scheinbar kürzere Impulsantworten wirksam sind. Die eigentliche Entscheidung fällt ein Viterbi-Detektor. Der Vorteil dieses Verfahrens besteht einerseits darin, dass unmittelbar auf die Messwerte abgestellt wird, und dass andererseits der Viterbi-Detektor mit weniger Zuständen auskommt.

Beim anderen Verfahren werden die überlagerten und verzerrten Signale zunächst mit Hilfe eines Dekorrelators nach Richtungen getrennt, jedoch nicht entzerrt. Die nachfolgende Sequenzrekonstruktion pro Richtung ist weniger aufwendig als für die kombinierten Signale, muss aber längere Impulsantworten berücksichtigen. Deshalb ist eine Vereinfachung durch eine Filterung, welche die unerwünscht lange Impulsantwort analog zum obigen Verfahren kompensiert, angezeigt. Die Zurückführung auf den Einkanal-Fall hat den Vorteil, dass sich die Verarbeitung nach dem Dekorrelator parallelisieren lässt.

Beide Verfahren lassen sich noch verbessern durch eine laufende Auswertung der Qualität der Entscheidungen, auf Grund derer eine Adaptation der Uebertragungskanalmodellparameter vorgenommen wird.

Im folgenden wird die Erfindung mit Bezug auf die beigefügten Zeichnungen näher erläutert. Darin zeigen:

Fig. 1: Eine Skizze der Verhältnisse zur Erläuterung des Problems
Fig. 2: Das Uebertragungskanalmodell
Fig. 3: Die Rahmenstruktur der gesendeten Daten
Fig. 4: Eine typische Kanalimpulsantwort einer langen Leitung
Fig. 5: Das Prinzip der Signalrückgewinnung im einkanaligen Fall
Fig. 6: Eine mögliche, kombinierte Ausführungsform des Entscheiders aus Fig. 5
Fig. 7: Die bevorzugte Ausführungsform eines Entscheiders für den einkanaligen Fall; einen reduzierten Viterbi-Detektor mit interner Entscheidungsrückführung
Fig. 8: Die Signalrückgewinnung mittels Dekorrelator im zweikanaligen Fall
Fig. 9: Die bevorzugte Ausführungsform des Entscheiders für den zweikanaligen Fall

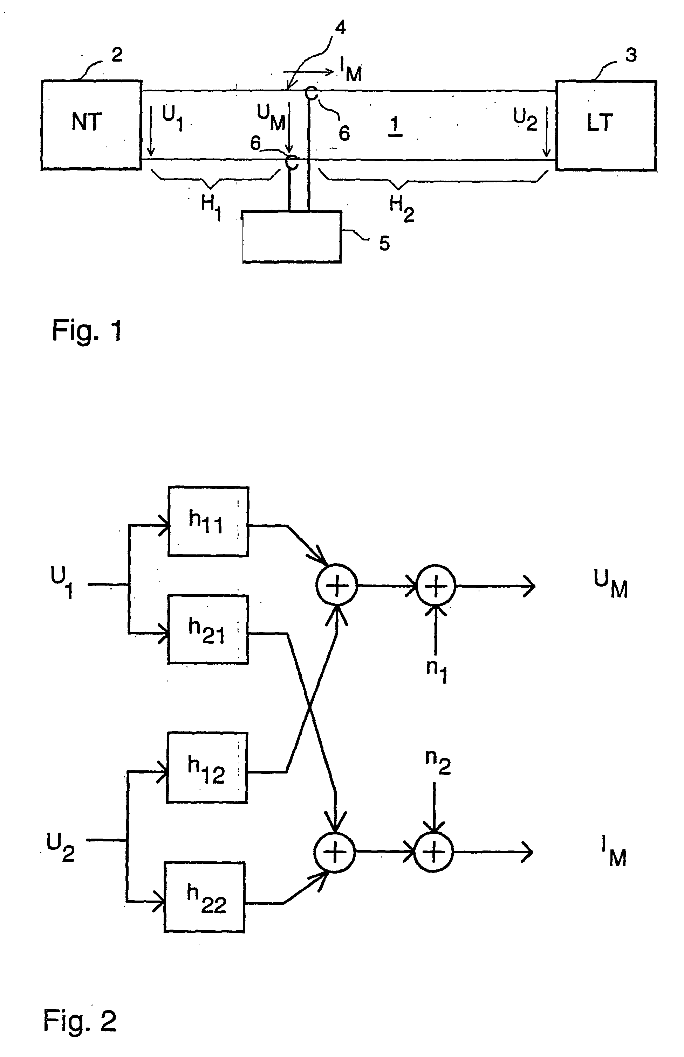

Die Figur 1 zeigt schematisch die zweiadrige Leitung 1 zwischen dem teilnehmerseitigen Abschluss 2 und dem zentralenseitigen Abschluss 3. Die Abschlüsse - in der Terminologie des integrierten Nachrichtennetzes (ISDN) mit "Network Termination" (NT) 2 bzw. "Line Termination" (LT) 3 bezeichnet - sind mit Gabelschaltungen und Echokompensatoren ausgerüstet, die auch für eine Anpassung an den Wellenwiderstand der Leitung sorgen. An den so gestalteten Abschlüssen ist die Extraktion und Rekonstruktion des von der Gegenstelle gesendeten Signals verhältnismässig einfach möglich.

Nicht so an beliebiger Stelle 4 auf der Zweidrahtleitung 1 - im ISDN die digitale Teilnehmerleitung im Voll-Duplex-Betrieb, $U_{k0}$-Schnittstelle genannt. Hier sind die von den beiden Seiten gesendeten Signale $U_1$ und $U_2$ überlagert. Durch die Eigenschaften der Leitung wie Dämpfung, Frequenzverzerrung, Stossstellen usw. sind sie unterschiedlich verformt. Es ist nicht ohne weiteres ersichtlich, welche auf der Leitung verkehrenden Signalanteile von welcher Seite stammen. Genügte für die unverschlüsselten, analog übertragenen Daten noch ein Abhören nach einfachem, hochohmigem Anschliessen eines Kopfhörers mit Verstärker, um einen Eindruck über den Zustand der Leitung zu gewinnen, ergeben sich für die Ueberprüfung und Wartung derselben Leitung mit digitalem Datenverkehr ganz andere Probleme. Die verwürfelt übertragenen Nutzdaten lassen sich nur nach einem Rückgängigmachen der Verwürfelung interpretieren. Um dies bewerkstelligen zu können, müssen zunächst die ursprünglich gesendeten Daten mit äusserst geringer Fehlerwahrscheinlichkeit rekonstruiert werden. Die Uebertragungseigenschaften üblicher Teilnehmerleitungen, ursprünglich ausgelegt für den Sprachverkehr mit Frequenzen bis wenige kHz, ändern sich erheblich für Frequenzen über 10 kHz. Typisch sind aber Symbolübertragungsraten von 80'000 vierwertigen Symbolen pro Sekunde. Insbesondere an Messstellen 4 gegen eines der Enden der Teilnehmerleitung 1, wo die Dämpfungen für derart hohe Frequenzen stark unterschiedlich sind, unter Umständen bis zu 40 dB, ergeben sich dadurch grosse Schwierigkeiten. Je nach der dem Ueberwacher nicht bekannten Zusammensetzung der Leitung (Drahtdurchmesser, Länge, Spleissstellen) sind die Uebertragungseigenschaften unterschiedlich.

Es stellt sich also das Problem, an der beliebigen Stelle 4 in unbekanntem Abstand von den Abschlüssen 2 bzw. 3 auf der Leitung 1, deren Eigenschaften nicht näher bekannt sind, die von den beiden Abschlüssen 2,3 auf die Leitung 1 aufgebrachten Datenströme zu rekonstruieren, ohne die bestehende Verbindung zu stören, geschweige denn zu unterbrechen oder die Leitung aufzutrennen. Letzteres hätte zur Folge, dass die Verhältnisse gänzlich anders wären und die Echokompensatoren in den Abschlüssen sich neu adaptieren müssten.

An der Stelle 4 wird ein Monitor 5, der unter anderem die gewünschte Rekonstruktion vorzunehmen hat, über die Anschlussstellen 6 angeschlossen, ohne die Leitung merklich zu beeinflussen. Dies geschieht durch hochohmiges und/oder induktives und/oder kapazitives Ankoppeln mit dem Fachmann geläufigen Mitteln, zum Beispiel mit Hallsonden, Operationsverstärkern und dergleichen, auf die an dieser Stelle nicht weiter eingegangen werden muss. Die Art der Ankoppelung ermöglicht, an der Stelle 4 der Leitung 1 laufend die Momentanwerte von Spannung $U_M$ und Strom $I_M$ zu messen. Messen nur einer der Grössen wäre apparativ zwar etwas weniger aufwendig, ergäbe aber grössere Fehlerwahrschlinlichkeiten für eine Rekonstruktion der Daten. Messen zweier Spannungen würde zwei weit voneinander entfernte Anschlussstellen bedingen, was nicht erwünscht ist.

Durch die Auswähl der Stelle 4 wird die Leitung in zwei Abschnitte unterteilt, die je ihre spezifische Uebertragungscharakteristik haben. In der Figur 1 sind diese mit $H_1$ bzw. $H_2$ angegeben. Diese Leitungsabschnitte sind je durch den Wellenwiderstand des jeweils anderen Leitungsabschnitts abgeschlossen.

Die Abschnitte $H_1$ und $H_2$ lassen sich als Filter modellieren, welche je das vom Abschluss 2, 3 gesendete Signal $U_1$, $U_2$ verzerren. Die Abschnitte schliessen je einen Impulsformer für das zu sendende Signal mit ein, worauf später im Zusammenhang mit der Kanalimpulsantwort noch zurückzukommen ist. Diese Abstrahierung führt auf das in der Figur 2 dargestellte Uebertragungskanalmodell. Das gesendete Signal $U_1$ hat eine Uebertragungsfunktion $h_{11}$ zur Messspannung $U_M$ und eine Uebertragungsfunktion $h_{21}$ zum Messstrom $I_M$. Desgleichen hat das Sendesignal $U_2$ eine Uebertragungsfunktion $h_{12}$ zur Messspannung $U_M$ und eine Uebertragungsfunktion $h_{22}$ zum Messstrom $I_M$. Diese Uebertragungsfunktionen oder Impulsantworten $h_{ij}$, je nach mathematischer Darstellung, sind Beschreibungen für die einzelnen, modellierten Filter; die Ausgänge ergeben sich im Zeitbereich aus der Faltungsoperation von $h_{ij}$ mit $U_j$. Das Modell berücksichtigt ferner einen Rauschanteil, herrührend von der Leitung und der Messung. Er wird als additives, weisses, gauss'sches Rauschen $n_i$, i=1,2, unabhängig von $U_j$ modelliert. Das zugehörige Gleichungssystem lautet:

$$U_M = h_{11}*U_1 + h_{12}*U_2 + n_1$$

$$I_M = h_{21}*U_1 + h_{22}*U_2 + n_2$$

Darin bezeichnet * den Faltungsoperator.

Aus diesem Gleichungssystem lässt sich die zu lösende Aufgabe ablesen. $U_M$ und $I_M$ als Messgrössen sind bekannt, alle übrigen Grössen sind unbekannt. Gesucht sind $U_1$ und $U_2$. Die Bestimmung der Uebertragungsfunktionen $h_{ij}$ aus speziellen Messungen, insbesondere durch Einspeisung bekannter Signale an den Endstellen, ist aus den vorgängig erwähnten Gründen nicht möglich.

Erfindungsgemäss wird nun die Kenntnis über die Struktur der gesendeten Signale und deren teilweise vorbestimmten Inhalt ausgenützt, um zunächst die Uebertragungseigenschaften der Leitungsabschnitte, das heisst die Parameter des Uebertragungskanalmodells zu bestimmen.

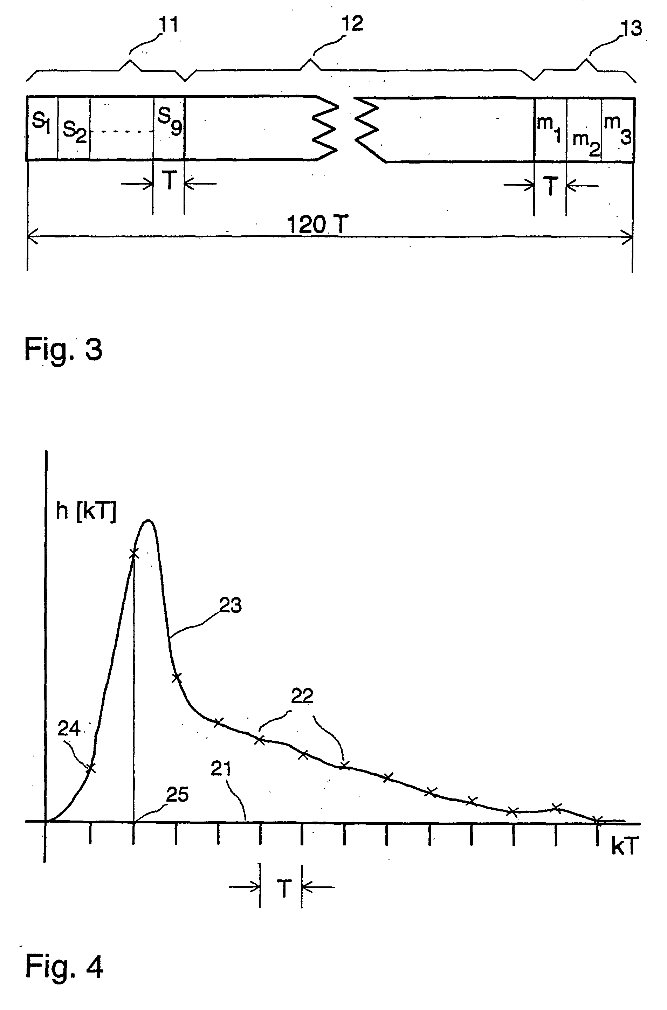

Die Figur 3 zeigt als Beispiel die Rahmenstruktur der ISDN-Signale. Es versteht sich, dass anderswie genormte Signale, welche in ähnlicher Weise in Struktur und Inhalt vorbestimmte Merkmale aufweisen, ebenso ausgewertet werden können. Der Rahmen umfasst ein Synchronisationswort 11, bestehend aus neun Abschnitten $s_1$ bis $s_9$, den Nutzdaten 12 und den Wartungsdaten 13, dem sogenannten M-Kanal, bestehend aus drei Abschnitten $m_1$ bis $m_3$. Die Nutzdaten eines ISDN-Datenstroms ihrerseits bestehen aus den zwei B-Kanälen für die eigentlich zu übertragende Information und dem D-Kanal mit Signalisierungsfunktion. Sie sind.in zwölf sogenannte (2B+D)-Felder zusammengefasst, die zusammen 108 Abschnitte ausmachen. Ein Abschnitt umfasst ein Symbol, ein sogenanntes Quat, ein vierwertiges Signal mit dem Informationsgehalt von 2 bit. Die Abschnitte werden im Takt mit der Taktzeit T von 12,5 μs übertragen. Die Symboldatenrate beträgt somit 80 kBaud/s, die Uebertragungsrate der Information 160 kbit/s, wovon zweimal 64 kbit/s auf die beiden B-Kanäle entfallen. Jeweils acht solcher 1,5 ms langer Rahmen (Frames) bilden einen Ueberrahmen (Superframe), zu dessen Kennzeichnung das Synchronisationswort mit umgekehrter Polarität gesendet wird. Das zuletzt genannte Detail kann für die nachfolgend erörterten, prinzipiellen Ueberlegungen ausser acht gelassen werden.

Das Synchronisationswort 11 hat eine fest gegebene Quatfolge, die immer gleich bleibt. Beide Anschlusstellen senden dasselbe Synchronisationswort, sind jedoch aufeinander synchronisiert und senden dieses je um 60 ($\pm$ 2) Taktzeiten verschoben. Die Information der Nutzdaten und der Wartungsdaten hingegen wird vor der Codierung - je Richtung unterschiedlich - in die Quatfolge mit einem Polynom 23. Ordnung verwürfelt (scrambled). Damit wird eine statistische Verteilung der Symbole erreicht, die den Charakter von weissem Rauschen hat. Die einzelnen Symbole, also die Quats, werden als pulsamplitudenmodulierte Signale mit normierter Impulsform auf die Zweidraht-Leitung geschickt. Der Takt der zeitdiskreten, synchronisierten Impulsfolge ist im wesentlichen bekannt und ist aus der Messung auf der Leitung zurückzugewinnen.

Diese bekannte Struktur der gesendeten Daten erlaubt es, an der beliebigen Stelle auf der Leitung nach einer Taktrückgewinnung die Nutzdaten mitsamt dem Rauschen wegzufiltern und gleichzeitig je die Signalform, die von den gesendeten Impulsen des einen beziehungsweise andern Synchronisationswortes stammen, herauszufiltern. Hierzu kann auf hinlänglich bekannte Mittel der Signalverarbeitung gegriffen werden, wie rahmenweise Mittelwertbildung, Korrelationsrechung o.ä..

Steht solcherart einmal fest, welche (gemittelten) Signalformen den a priori bekannten Impulsformen der gesendeten Synchronisationswörter zugeordnet sind, lassen sich die Eigenschaften der Uebertragungskanalabschnitte festlegen, allerdings ohne zu wissen, welcher Abschnitt zu welchem Abschluss (NT oder LT) führt, was aber unerheblich ist, weil die Zuordnung später aus der Decodierung hervorgeht. Die Eigenschaften ergeben sich im Fall der zeitdiskreten Modellierung als Wertfolgen $h_{ij}$ aus der Auflösung des Gleichungssystems

$$U_M[k] = \sum_{l=0}^{L} h_{11}[l] \cdot U_1[k-l] + \sum_{l=0}^{L} h_{12}[l] \cdot U_2[k-l]$$

$$I_M[k] = \sum_{l=0}^{L} h_{21}[l] \cdot U_1[k-l] + \sum_{l=0}^{L} h_{22}[l] \cdot U_2[k-l]$$

nach den $h_{ij}$. Dabei ist bei der Auswertung der Faltungsoperation im zeitdiskreten, kausalen System angenommen worden, dass die Wertfolgen endliche Länge von L Taktzeiten T haben. Für die Lösung dieses Systemidentifikationsproblems existieren in der Literatur verschieden Ansätze, z.B. die Korrelationsanalyse - falls, wie in unserem Fall des Synchronisationswortes, das Eingangssignal nicht weiss ist, müssen Ein- und Ausgang noch mit einem sogenannten "Whitening-Filter" gefiltert werden. Andere Lösungswege zur Schätzung der Kanäle, zum Beispiel mit Hilfe der diskreten Fourier-Transformation, stehen dem Fachmann auf diesem Gebiet offen. Eine bevorzugte Möglichkeit ist zum Beispiel jene mit Hilfe der Fourier-Transformation. Im beispielsweise vorliegenden Fall ist von den herausgefilterten Werten jeweils $U_2[k-l]$ null, wenn $U_1[k-l]$ von null verschieden ist, und umgekehrt, wodurch sich das Gleichungssystem vereinfacht. Ein- und Ausgangssignalverlauf werden je einer Schnellen Fourier-Transformation (FFT) unterzogen, die Resultate dividiert und das Ergebnis zurücktransformiert. Die Wertfolgen $h_{ij}$ sind die Kanalimpulsantworten. Sie entsprechen dem an der beliebigen Stelle auf der Leitung gemessenen Signal ohne Rauschanteil, wenn beim zentralen- oder teilnehmerseitigen Abschluss ein Einheitsimpuls im mathematischen Sinn eingespiesen wird. Tatsächlich schickt ein im Abschluss vorhandener Impulsformer einen normierten Impuls auf die Leitung, der grob betrachter eine Anstiegszeit von 0,5 bis 0,75 und eine Abfallzeit von 0,5 bis 1 Taktzeit T aufweist. Das Kanalmodell schliesst die Impulsformung mit ein.

Die Figur 4 zeigt einen typischen Verlauf einer solchen Kanalimpulsantwort für eine lange Leitung. Auf der Abszisse 21 sind die Taktzeiten T der Symbolübertragung aufgetragen. Die Werte 22 der Impulsantwort an den Stützstellen kT sind der besseren Anschaulichkeit halber miteinander verbunden, was dem Verlauf 23 der kontinuierlichen Impulsantwort h(t) entspricht. Für die Ermittlung der Impulsantworten kann mit kürzeren Taktzeiten gearbeitet werden ("oversampling"), für die Verwendung in weiteren Verfahrensschritten jedoch ist die Impulsantwort durch die Werte an den Stützstellen kT definiert. Von besonderer Bedeutung ist die Stelle im Kurvenverlauf mit dem ausgeprägten Maximum, die den Referenzzeitpunkt 25 für das gesendete Symbol liefert. Die Verzerrungen gegenüber dem normierten Impuls sind erheblich, weist die Kanalimpulsantwort doch grosse Energieanteile in der bis zu 20 Taktzeiten langen, abfallenden Flanke auf; die Amplitude des gesendeten Impulses ist demgegenüber zwei Taktzeiten nach dem Maximum bereits auf unter 3 % gefallen. Bei hintereinander gesendeten Symbolen entstehen dadurch nachlaufende Intersymbolinterferenzen, kurz ISI genannt. Es ist eine Besonderheit dieser Kanalimpulsantwort, dass sie schon an einer oder gar zwei Stützstellen 24 vor dem Referenzzeitpunkt nicht vernachlässigbare Werte aufweisen kann. Dies rührt von der langen Anstiegszeit des Kanals bei langer Leitung her. In der Folge entstehen bei hintereinander gesendeten Symbolen auch vorlaufende ISI. Amplitudenabhängige Nichtlinearitäten können vernachlässigt werden; für verschieden hohe Normimpulse wird also die Kanalimpulsantwort identische Kurvenform mit proportional veränderter Amplitude aufweisen.

Sind die Kanalimpulsantworten und damit die Uebertragungskanalmodellparameter einmal bestimmt, wofür weiter oben eine von mehreren möglichen Methoden angegeben wurde, vereinfacht sich das Problem der Rekonstruktion der Eingangsdaten aus den Messwerten, lässt sich doch nun bei der Verarbeitung der Messwerte die Beeinflussung derselben durch die Leitung als bekannt einsetzen. Der gesonderte Verfahrensschritt der Bestimmung der Uebertragungskanalmodellparameter kann bei Bedarf sporadisch oder periodisch auch während der Echtzeitrekonstruktion der Sendedaten wiederholt werden.

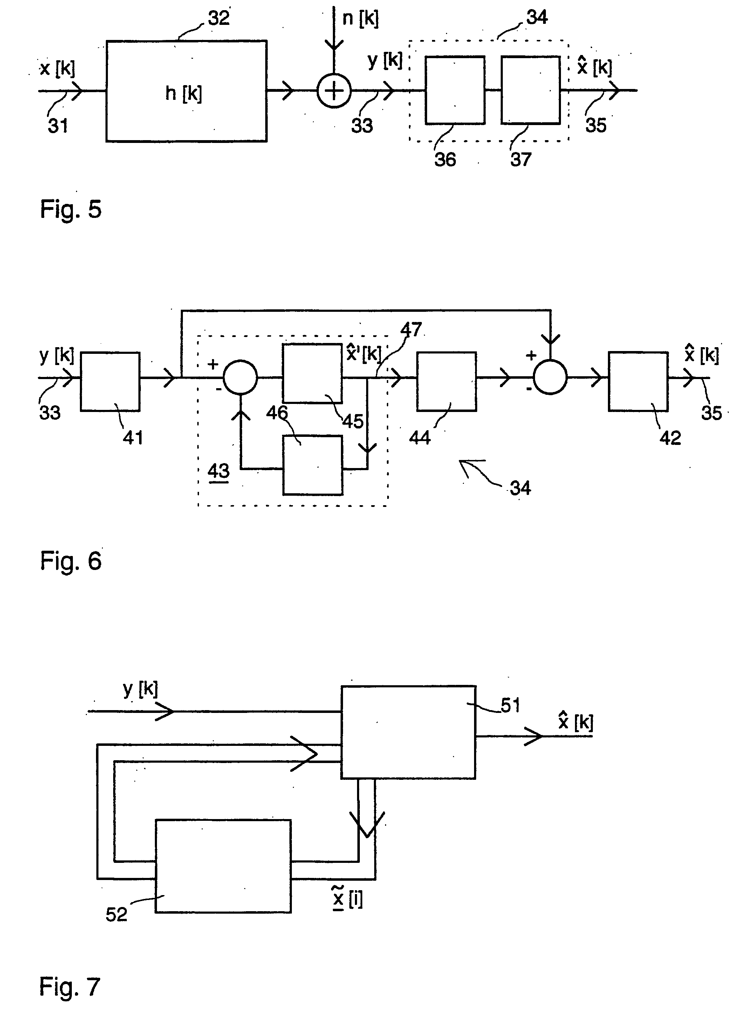

Die Figur 5 zeigt das Prinzip der Signalrückgewinnung für den Einbenutzer-Fall, d. h. für nur einen Kanal. Die unbekannten Daten x[k] werden am Eingang 31 der Leitung eingespeist. Letztere ist durch ihr Modell 32 mit der Kanalimpulantwort.h[k] vertreten. Am Ausgang 33 der Leitung, das heisst an der beliebigen Anschlussstelle, lassen sich die Messwerte y[k] registrieren, die Kanal- und Messrauschen n[k] enthalten. Ein weiterer Systemblock, der Entscheider 34, bestimmt aus y[k] den Schätzwert ^x[k], der als Ausgang 35 für die weitere Verarbeitung, namentlich die Decodierung, zur Verfügung steht. Die ^x[k] werden im gegebenen Takt in Echtzeit laufend berechnet, eine konstante zeitliche Verzögerung von einigen Taktzeiten zwischen x[k] und dem zugehörigen Schätzwert ist dabei unerheblich. Theoretisch lässt sich ein Entscheider 34 für die oben dargelegte, prinzipielle Aufgabe, auf vielfältige Art realisieren, doch ist in der Praxis der damit verbundene Rechenaufwand oft nicht in Echtzeit zu bewältigen.

Die erfindungsgemässe Ausgestaltung des Entscheiders 34 benützt die Uebertragungskanalmodellparameter und ermöglicht eine Optimierung zwischen Aufwand und Qualität der Schätzung. Eine erste Möglichkeit einer einfachen Implementierung ist die Filterung von y[k] durch das zu h[k] inverse Filter, in der Figur dargestellt durch den Filterblock 36, mit anschliessender Schwellwertdetektion, in der Figur vertreten durch den Detektorblock 37. Die Realisierung des inversen Filters ist allerdings sehr parametersensitiv und hat den Nachteil der Rauschverstärkung. Eine weitere Möglichkeit besteht darin, im Filterblock 36 ein Filter zu realisieren, das die Kanalimpulsantwort zwar entzerrt, aber nicht ganz kompensiert. Die resultierende Kanalimpulsantwort bis und mit dem Ausgang des Filterblocks 36 wird auf diese Weise wesentlich verkürzt. Die Entscheidung wird im nachgeschalteten Detektorblock 37 in komplexerer Art gefiltert, als mit dem einfachen Schwellwertdetektor, zum Beispiel durch einen Viterbi-Detektor. Dank dem vorgeschalteten Filter kann der Rechenaufwand für den Viterbi-Detektor kleiner gehalten werden.

Die Figur 6 zeigt eine kombinierte Variante für den Entscheider 34. Darin wird der Eingang 33 mit den Messwerten y[k] auf ein Vorfilter 41 geleitet und danach auf parallelen Pfaden einerseits direkt zu einem Viterbi-Detektor 42, andererseits über einen Schwellwertdetektor mit Entscheidungsrückkopplung 43 und ein Nachfilter 44 ebenfalls an den Viterbi-Detektor 42, der an seinem Ausgang 35 die gesuchten Schätzwerte ^x[k] liefert. Diese Anordnung kombiniert zwei mögliche Lösungen für das Entscheidungsproblem, die nachstehend im einzelnen erörtert sind.

Wird das Vorfilter 41 zu eins (Durchgang) und das Nachfilter 44 zu null (Unterbruch) gesetzt, so bleibt als Entscheider allein der Viterbi-Detektor 42. Auf Grund von M möglichen Eingangssymbolen pro Takt und einer Kanalimpulsantwort von L+1 Taktzeiten befindet sich das modellierte System in jedem Takt in einem von $M^L$ möglichen Zuständen. Der Viterbi-Detektor bestimmt auf Grund der Messwerte y[k] laufend die Sequenz ^x[k], die am wahrscheinlichsten auf y[k] führt. Der Viterbi-Detektor ergibt für additives, gauss'sches Rauschen optimale Resultate im Sinn des Maximum Likelihood-Kriteriums. Der Rechenaufwand jedoch steigt exponentiell mit dem Kanalgedächtnis der Länge L Taktzeiten.

Der Schwellwertdetektor mit Entscheidungsrückkopplung 43, in der Literatur unter dem Namen Decision Feedback Equalizier (DFE) bekannt, besteht aus einem M-wertigen Schwellwertdetektor 45 im Vorwärtspfad und einem Rückkopplungsfilter 46. Er ist, mit Vorteil zusammen mit dem Vorfilter 41 angewendet, für sich allein ein Entscheider, das heisst der Ausgang 47 des Schwellwertdetektors 45 liefert eine brauchbare Schätzung ^x'[k]. Das Vorfilter 41 hat hier die Aufgabe, die vorlaufende Intersymbolinterferenz zu kompensieren, was mit einem eher kurzen Transversalfilter geschehen kann. Das Rückkopplungsfilter 46, ebenfalls ein Transversalfilter, bildet die nachlaufende ISI nach. Bei richtiger Schätzung des Symbols liegt am Eingang des Schwellwertdetektors 45 jeweils ein um die Verzerrungen korrigierter Impuls an. Diese Anordnung ist einfach zu implementieren und verstärkt das Rauschen nicht. Nachteilig jedoch wirken sich Entscheidungsfehler aus, die zu einer Fehlerfortpflanzung und damit zu eigentlichen Fehlerblöcken führen können.

Die Nachschaltung eines Nachfilters 44 nach dem DFE bezweckt, einen Teil der nachlaufenden ISI wieder zu generieren, basierend auf der vorläufigen Entscheidung ^x'[k] des DFE. Das Nachfilter 44 ähnelt also dem Rückkopplungsfilter 46, generiert aber nur einen Teil der durch die langsam abfallende Flanke der Kanalimpulsantwort verursachten Signalanteile. Am Eingang des Viterbi-Detektors 42 steht somit eine um die vorlaufende und einen Teil der nachlaufenden ISI kompensierte Signalfolge an, was einer teilweisen Entzerrung des Kanals entspricht. Der nachgeschaltete Viterbi-Detektor 42 kann dann mit einer verkürzten Kanalimpulsantwort arbeiten, was dessen Aufwand erheblich reduziert (reduzierter Viterbi-Detektor). Er trifft die definitive Entscheidung ^x[k]. Diese Kombination ergibt einen Kompromiss zwischen ausreichender Entscheidungsqualität und vertretbarem Aufwand. Durch geeignete Wahl des Nachfilters 44 lässt sich die Gewichtung verschieben. Wird es null gesetzt, ergibt sich die Lösung des reinen Viterbi-Detektors, wird es dem Rückkopplungsfilter 46 gleich gemacht, ist der Eingang zum Viterbi-Detektor 42 gleich jenem zum Schwellwertdetektor 45, womit der Viterbi-Detektor 42 auch wie jener arbeitet und das System einem reinen DFE entspricht. Als Nachteil ist auch hier die Fehlerfortpflanzung zu beachten, die sich aber weniger gravierend auswirkt, weil der Viterbi-Detektor, dessen Entscheidungen auf einer Analyse aller möglichen Symbolkombinationen beruht, ausgleichend wirkt.

Der letztgenannte Nachteil lässt sich mit entsprechendem Rechenaufwand ebenfalls mildern. Figur 7 zeigt einen reduzierten Viterbi-Detektor mit interner Entscheidungsrückführung. Die vorläufigen Entscheidungen $\sim x$[i] des Viterbi-Detektors 51, der mit einer reduzierten Länge arbeitet, werden im ISI-Generator 52 mit dem zu kompensierenden Teil der Kanalimpulsantwort gefaltet und intern zurückgeführt. Damit wird ein Teil der nachlaufenden ISI kompensiert. Der Viterbi-Detektor 51 fällt die Entscheidung $\hat{x}$[k] auf Grund des nicht kompensierten, vorzugsweise energiereichen Teils der ISI. Dadurch kann der Viterbi-Detektor mit einer reduzierten Anzahl von Zuständen arbeiten.

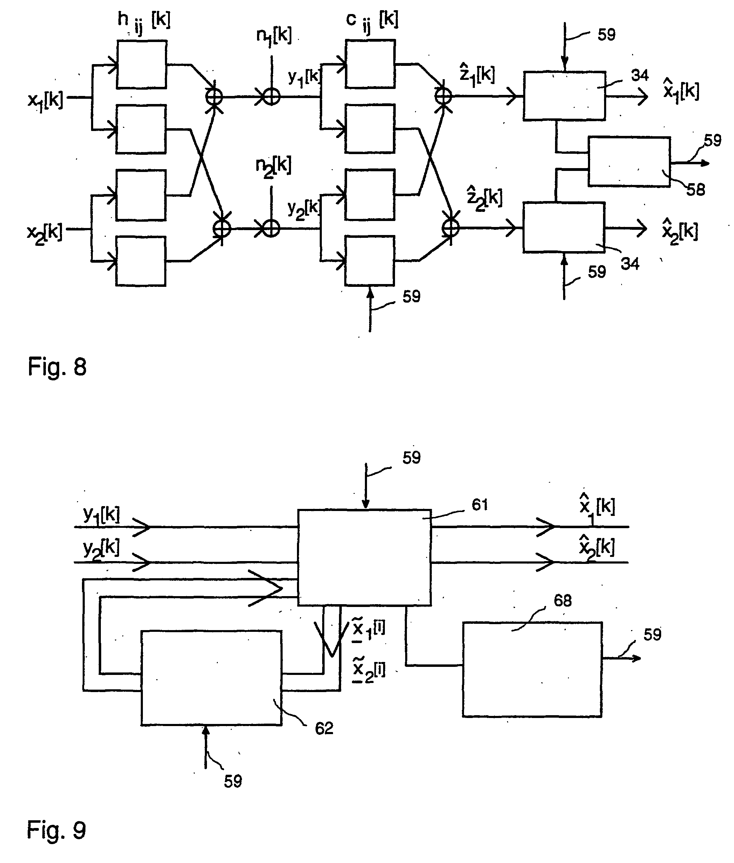

Die soeben dargelegten, prinzipiellen Verfahren zur Rekonstruktion der Daten werden nun übertragen auf den eigentlich interessierenden Fall der von beiden Anschlussstellen gleichzeitig gesendeten Signale, die überlagert und wieder aufzutrennen sind. Die Figur 8 zeigt das Prinzip der einen der Ausführungsvarianten zur Durchführung des erfindungsgemässen Verfahrens, analog zur Figur 5 mit dem einkanaligen Fall. Die linke Hälfte der Figur zeigt nochmals das Uebertragungskanalmodell, wie es anhand der Figur 2 bereits beschrieben wurde. Die Filter $c_{ij}$[k] haben die Aufgabe, die Messungen zu dekorrelieren, das heisst in ihre orthogonalen und unabhängigen Komponenten zu zerlegen. Mit $c_{11}=h_{22}$, $c_{12}=-h_{12}$, $c_{21}=-h_{21}$, $c_{22}=h_{11}$ ergibt sich $\hat{z}_i=(h_{11}*h_{22}-h_{12}*h_{21})\cdot x_i$. Damit ist das Zweibenutzer-System in zwei Einbenutzer-Systeme transformiert. Die Entzerrung und Entscheidungsfindung kann mit je einem Entscheider 34 getrennt nach einem der zuvor beschriebenen Verfahren erfolgen. Die getrennte Verarbeitung kann parallel und gleichzeitig erfolgen. Die Filter $c_{ij}$[k] haben dieselben Eigenschaften wie die Leitung, im wesentlichen also Tiefpasscharakteristik. Damit wird additives Rauschen nicht verstärkt. Unerwünscht ist jedoch, dass als Folge der weiteren Filterung - man beachte die Faltungsoperation in der Gleichung für $\hat{z}_i$ - zusätzliche Intersymbolinterferenz eingeführt wird. Der energiereiche Teil der Kanalimpulsantwort von $x_i$[k] nach $\hat{z}_i$[k] kann fast doppelt so lang sein, wie für ein $h_{ij}$, der Referenzzeitpunkt kann über zwei bis drei Taktzeiten verwischt werden. Die Dekorrelation gelingt so exakt, wie die Uebertragungskanalmodellparameter bekannt sind. Sie ist vor allem empfindlich auf unterschiedliche Dämpfungen, also weniger genau beim Anschluss des Monitors an langen Leitungen nahe eines Abschlusses.

Der hohen Empfindlichkeit auf die Uebertragungskanalmodellparameter lässt sich Rechnung tragen, indem diese während des Betriebs feinabgestimmt werden. Die Berechnungen innerhalb der Entscheider lassen Rückschlüsse auf die Qualität der Modellierung zu. Zeigt sich zum Beispiel am Schwellwertdetektor, dass die zu diskriminierenden Werte oft nahe der Schwelle liegen, der Entscheid also mit relativ grosser Unsicherheit belastet ist, so ist höchstwahrscheinlich die Modellierung nicht optimal. Dasselbe gilt, wenn die laufende Fehlerabschätzung im Viterbi-Detektor grosse Varianz aufweist. Der Fachmann auf diesem Gebiet wird aus derartigen Auswertungen Algorithmen herleiten, die ein adaptives Nachregeln der Uebertragungskanalmodellparameter ermöglicht. In der Figur 8 ist dieser weitere Verfahrensanteil durch den Funktionsblock der Modellparameteradaptation 58 angegeben, die am Ausgang die Nachstellwerte 59 liefert, welche an den Dekorrelator und die Entscheider zurückgekoppelt werden.

Die Figur 9 zeigt das Prinzip der zweiten Ausführungsvariante des Verfahrens zur Rekonstruktion der auf der Leitung überlagerten Daten. Es handelt sich um die Erweiterung des anhand von Figur 7 erörterten Einbenutzer-Falls mit Datenrekonstruktion durch einen reduzierten Viterbi-Detektor mit interner Entscheidungsrückführung. Der reduzierte Viterbi-Detektor 61 legt auf Grund der Eingangsfolgen $y_1$[k] und $y_2$[k] die vorläufigen Entscheidungen $\sim x_1$[i] und $\sim x_2$[i] fest, die im ISI-Generator 62 im Rückkopplungspfad je mit den entsprechenden Anteilen der Kanalimpulsantworten gefaltet werden. Mit dem Ergebnis werden die zu verarbeitenden Folgen kompensiert, so dass der Viterbi-Detektor 61 mit scheinbar kürzeren Impulsantworten, als wie sie für eine adäquate Modellierung nötig sind, arbeiten kann. Die definitive Entscheidung wird als $\hat{x}_1$[k] und $\hat{x}_2$[k] ausgegeben.

Auch hier ist eine Verbesserung zu erreichen, wenn die Uebertragungskanalmodellparameter laufend feinabgestimmt werden. Die Modellparameteradaptation 68 liefert die Nachstellwerte 59 für den Viterbi-Detektor 61 und den ISI-Generator 62.

Selbstverständlich sind auch Mischformen der zwei Ausführungsvarianten möglich, indem die Filter $c_{ij}$ für andere Eigenschaften als die vollständige Entkopplung ausgelegt sind, z. B. eine Reduktion der ISI, und an Stelle der zwei unabhängigen Entscheider 34 der ersten Variante der zweikanalige, noch weiter reduzierte Viterbi-Detektor 61 mit interner Entscheidungsrückführung tritt.

## Patentansprüche

1. Verfahren zur Extraktion von Daten auf einer Zweidraht-Telephonleitung, wenn die Daten digital im Voll-Duplex-Betrieb ausgetauscht werden und in Struktur und Inhalt vorbekannte Merkmale aufweisen und die Extraktion an einer beliebigen Stelle der digitalen Zweidraht-Telephonleitung erfolgt, durch die die Zweidraht-Telephonleitung in zwei Übertragungskanalabschnitte aufgeteilt wird, **gekennzeichnet durch** folgende Verfahrensschritte:

- Anschließen eines Monitors (5) an die Telephonleitung (1) an der beliebigen Stelle (4), ohne die Eigenschaften der Telephonleitung (1) merklich zu beeinflussen;

- Messen und Registrieren von Spannungs- und Stromverlauf ($U_M$, $I_M$) auf der Telephonleitung an dieser Stelle (4) **durch** den Monitor (5);

- Herausfiltern der zu den inhaltlich vorbekannten Anteilen der Daten gehörigen Signalverläufe auf Grund der vorbekannten Struktur;

- zu Grunde legen eines parametrisierten Modells der Übertragungskanalabschnitte (H1, H2);

- Ermitteln der Übertrogungskanalmodellparameter ($h_{ij}$) der Übertragungskanalabschnitte (H1, H2) **durch** in Beziehung setzen der registrierten Signalverläufe ($U_M$, $I_M$) mit den vorbekannten Merkmalen der Daten; und

- Verarbeiten der Signalverläufe ($U_M$, $I_M$) in Echtzeit unter Berücksichtigung der ermittelten Parameter der Übertragungskanalabschnitte (H1, H2) und Rekonstruieren der ursprünglich gesendeten Daten mit Mitteln der Entscheidungstheorie.

2. Verfahren nach Anspruch 1, **gekennzeichnet durch** ein Herausfiltern der unverwürfelten, verzerrten Synchronisationswörter und Festlegen der Übertragungskanalmodellparameter ($h_{ij}$) beider Übertagungskanalabschnitte **durch** Auswerten der Verzerrungen in den Signalformen der Synchronisationswörter für den Fall, dass die der Telephonleitung beidseitig mit einer vorgegebenen Rahmenstruktur eingespeisten Daten (11, 12, 13) je aus zu einer Quasizufallsfolge mit bekanntem Spektrum verwürfelten Nutzdaten (12, 13) und einem unverwürfelten Synchronisationswort (11) bestehen.

3. Verfahren nach Anspruch 1 oder 2, **dadurch gekennzeichnet, dass** die Signalverläufe ($U_M$, $I_M$; $y_1$, $y_2$) einer kombinierten Sequenzrekonstruktion für die Eingangsdaten beider Seiten unterworfen werden, welche den Leitungseinfluss auf Grund der Übertragungskanalmodellparameter ($h_{ij}$) berücksichtigt.

4. Verfahren nach Anspruch 3, **dadurch gekennzeichnet, dass** die Sequenzrekonstruktion durch einen reduzierten Viterbi-Detektor (61) in Verbindung mit einer internen Entscheidungs-Rückführung erfolgt.

5. Verfahren nach Anspruch 4, **dadurch gekennzeichnet, dass** eine laufende Fehlerabschätzung im reduzierten Viterbi-Detektor (61) einer Modellparameteradaptation (68) dient, welche Nachstellwerte (59) für die Übertragungskanalmodellparameter ($h_{ij}$) im Viterbi-Detektor (61) und in der internen Entscheidungsrückführung liefert.

6. Verfahren nach Anspruch 1 oder 2, **dadurch gekennzeichnet, dass** die überlagerten Signolverläufe ($y_1$, $y_2$) mit Hilfe eines Dekorrelators ($c_{ij}$) auf Grund der Übertragungskanalmodellparameter ($h_{ij}$) in nach Richtung getrennte Signalverläufe ($\hat{z}_1$, $\hat{z}_2$) aufgespalten und je einzeln einer Sequenzrekonstruktion unterworfen werden.

7. Verfahren nach Anspruch 6, **dadurch gekennzeichnet, dass** die Sequenzrekonstruktion für jeden der beiden nach Richtung getrennten Signalverläufe ($\hat{z}_1$, $\hat{z}_2$) durch je ein die Kanalimpulsantwort kürzendes Filter (36) und einen nachgeschalteten Detektor (37) erfolgt.

8. Verfahren nach Anspruch 6, **dadurch gekennzeichnet, dass** die Sequenzrekonstruktion für jeden der beiden nach Richtung getrennten Signalverläufe ($\hat{z}_1$, $\hat{z}_2$) durch je einen reduzierten Viterbi-Detektor (51) in Verbindung mit einer internen Entscheidungs-Rückführung erfolgt.

9. Verfahren nach Anspruch 6, 7 oder 8, **dadurch gekennzeichnet, dass** eine laufende Fehlerabschätzung aus den beiden Sequenzrekonstruktionen einer Modellparameterodaptation (58) dient, welche Nachstellwerte (59) für die Übertragungskanalmodellparameter ($h_{ij}$) sowohl für die Dekorrelation ($c_{ij}$) als auch die Sequenzrekonstruktionen liefert.

10. Verfahren zum Ermitteln der Übertragungseigenschaften der durch Festlegen einer beliebigen Stelle (4) entlang einer Telephon-Zweidrahtleitung (1) entstehenden zwei Übertragungskanalabschnitte (H1, H2) im Betrieb, insbesondere für ein Verfahren nach Anspruch 1, wenn die im Betrieb anfallenden Daten in Struktur und Inhalt vorbekannte Merkmale aufweisen, **gekennzeichnet durch** folgende Verfahrensschritte:

- Anschließen eines Monitors (5) an die Telephonleitung (1) an der beliebigen Stelle (4), ohne die Eigenschaften der Telephonleitung (1) merklich zu beeinflussen;

- Messen und Registrieren von Spannungs- und Stromverlauf ($U_M$, $I_M$) auf der Telephonleitung an dieser Stelle (4) **durch** den Monitor (5);

- Herausfiltern der zu den inhaltlich vorbekannten Anteilen der Daten gehörigen Signalverläufe auf Grund der vorbekannten Struktur;

- zu Grunde legen eines parametrisierten Modells der Übertragungskanalabschnitte (H1, H2); und

- Ermitteln der Übertragungskanalmodellparameter ($h_{ij}$) der Übertragungskanalabschnitte (H1, H2) **durch** in Beziehung setzen der registrierten Signalverläufe ($U_M$, $I_M$) mit den vorbekannten Merkmalen der Daten.

**11.** Verfahren nach Anspruch 10, dadurch gegenzeichnet, dass die verwürfelten Nutzdaten weggefiltert und die unverwürfelten, verzerrten Synchronisationswörter weiterverwendet werden, wenn die der Telephonleitung beidseitig in einer vorgegebenen Rahmenstruktur eingespeisten Daten (11, 12, 13) je aus zu einer Quasizufallsfolge mit bekanntem Spektrum verwürfelten Nutzdaten (12, 13) und einem unverwürfelten Synchronisationswort (11) bestehen.

**12.** Verfahren nach Anspruch 2 oder 11, **dadurch gekennzeichnet, dass** der abgetastete Signalverlauf des herausgefilterten, unverwürfelten, verzerrten Synchronisationsworts als Ausgangsfolge und die als bekannt vorausgesetzte Signalform des Synchronisationsworts als im gleichen Takt abgetastete Eingangsfolge einer Faurier-Transformation unterworfen und daraus die Eigenschaften der Übertragungskanalabschnitte ($h_{ij}$) ermittelt werden.

**13.** Vorrichtung zur Durchführung des Verfahrens zur Extraktion von Daten auf einer Zweidraht-Telephonleitung nach Patentanspruch 1, wobei die Daten im Voll-Duplex-Betrieb ausgetauscht werden und in Struktur und Inhalt vorbekannte Merkmale aufweisen und die Extraktion an einer beliebigen Stelle der digitalen Zweidraht-Telephonleitung erfolgt, durch die die Zweidraht-Telephonleitung in zwei Übertragungskanalabschnitte aufgeteilt wird, **gekennzeichnet durch**

- einen mit einem hochohmigen Spannungs- und einem niederohmigen Stromabgriff an die Telephonleitung (1) anschließbaren Monitor (5), der den Verlauf von Strom ($I_M$; $y_2$) und Spannung ($U_M$, $y_1$) misst und registriert;

- ein Filter, das auf Grund der vorbekannten Merkmale der Daten die Signalformen an der Messstelle (4) ermittelt, die dem bekannten Teil der beidseitig eingespeisten Signalform entsprechen;

- eine Schätzvorrichtung zur Bestimmung von Übertragungskanalmodellparametern ($h_{ij}$) aus den bekannten und den ermittelten Signalformen unter zu Grunde legen eines parametrisierten Modells der Übertragungskanalabschnitte (H1, H2); und

- einen Entscheider (34; 51, 52; 61, 62), der die Übertragungskanalmodellparameter ($h_{ij}$) für die Entscheidung benützt, um laufend aus dem registrierten Verlauf von Strom ($I_M$; $y_2$) und Spannung ($U_M$, $y_1$) Schätzwerte ($\hat{x}_1$, $\hat{x}_2$) für die ursprünglich gesendeten Daten ($U_1$, $U_2$; $x_1$, $x_2$) herzuleiten.

**14.** Vorrichtung nach Anspruch 13, **dadurch gekennzeichnet, dass** die Schätzvorrichtung je die ermittelten Signalformen und die zugehörige bekannte Signalform einer schnellen Fourier-Transformation unterzieht, je die Resultate dividiert und die Ergebnisse zurücktransformiert, was die Übertragungskanalmodellparameter ($h_{ij}$) ergibt.

**15.** Vorrichtung nach Anspruch 13, **gekennzeichnet durch** einen Dekorrelator ($c_{ij}$) der die überlagerten Signalverläufe ($y_1$, $y_2$) gestützt auf die Übertragungskanalmodellparameter ($h_{ij}$) in nach Richtung getrennte Signalverläufe ($\hat{z}_1$, $\hat{z}_2$) aufspaltet, und einen Entscheider (34; 51, 52), der für jeden der getrennten Signalverläufe ($\hat{z}_1$, $\hat{z}_2$) unabhängig die Schätzwerte ($\hat{x}_1$, $\hat{x}_2$) für die ursprünglich gesendeten Daten ($u_1$, $u_2$; $x_1$, $x_2$) herleitet.

**16.** Vorrichtung nach Anspruch 15, **gekennzeichnet durch** einen Entscheider (34) in Form eines reduzierten Viterbi-Detektors (51) mit interner Rückführung vorläufiger Entscheidungen ($\sim\underline{x}$) über einen Intersymbolinterferenz-Generator (52).

**17.** Vorrichtung nach Anspruch 13, **gekennzeichnet durch** einen zweikanaligen, reduzierten Viterbi-Detektor (61) mit interner Rückführung vorläufiger Entscheidungen, ($\sim\underline{x}_1$), ($\sim\underline{x}_2$) über einen Intersymbolinterferenz-Generator (62).

**Claims**

**1.** Method for extracting data on a two-wire telephone line, if the data are exchanged digitally in full duplex operation and have previously known features of structure and content, and extraction takes place at any chosen point of the digital two-wire telephone line, by which the two-wire telephone line is divided into two transmission channel sections, **characterised by** the following method steps:

- connecting a monitor (5) to the telephone line (1) at the any chosen place (4), without noticeably influencing the properties of the telephone line (1);
- measuring and registering the course of voltage and current ($U_M$, $I_M$) on the telephone line at this point (4) by the monitor (5);
- filtering out the signal courses associated with the portions of the data whose content is previously known, on the basis of the previously known structure;
- using a parametricised model of the transmission channel sections (H1, H2) as a basis;
- determining the transmission channel model parameters ($h_{ij}$) of the transmission channel sections (H1, H2) by relating the registered signal courses ($U_M$, $I_M$) to the previously known features of the data; and
- processing the signal courses ($U_M$, $I_M$) in real time taking into account the determined parameters of the transmission channel sections (H1, H2) and reconstructing the originally sent data with means of decision theory.

**2.** Method according to claim 1, **characterised by** filtering out of the unscrambled, distorted synchronisation words and establishing the transmission channel model parameters ($h_{ij}$) of both transmission channel sections by evaluating the distortions in the signal shapes of the synchronisation words for the case where the data (11, 12, 13) fed in to the telephone line on both sides with a predetermined frame structure each consist of user data (12, 13) scrambled into a quasi random sequence with a known spectrum and an unscrambled synchronisation word (11).

**3.** Method according to claim 1 or 2, **characterised in that** the signal courses ($U_M$, $I_M$; $y_1$, $y_2$) are subjected to a combined sequence reconstruction for the input data of both sides, which takes into account the line influence on the basis of the transmission channel model parameters ($h_{ij}$).

**4.** Method according to claim 3, **characterised in that** the sequence reconstruction takes place by means of a reduced Viterbi detector (61) in conjunction with an internal decision feedback.

**5.** Method according to claim 4, **characterised in that** a continuous error estimation in the reduced Viterbi detector (61) acts as model parameter adaptation (68), which supplies adjustment values (59) for the transmission channel model parameters ($h_{ij}$) in the Viterbi detector (61) and in the internal decision feedback.

**6.** Method according to claim 1 or 2, **characterised in that** the superimposed signal courses ($y_1$, $y_2$) are divided with the aid of a decorrelator ($C_{ij}$) on the basis of the transmission channel model parameters ($h_{ij}$) into signal courses ($^\wedge z_1$, $^\wedge z_2$) separated according to direction and each individually subjected to a sequence reconstruction.

**7.** Method according to claim 6, **characterised in that** the sequence reconstruction takes place for each of the two signal courses ($^\wedge z_1$, $^\wedge z_2$) separated according to direction by, in each case, a filter (36) shortening the channel pulse response and a detector (37) connected downstream.

**8.** Method according to claim 6, **characterised in that** the sequence reconstruction takes place for each of the two signal courses ($^\wedge z_1$, $^\wedge z_2$) separated according to direction by, in each case, a reduced Viterbi detector (51) in conjunction with an internal decision feedback.

**9.** Method according to claim 6, 7 or 8, **characterised in that** a continuous error estimation from the two sequence reconstructions acts as model parameter adaptation (58), which supplies adjustment values (59) for the transmission channel model parameters ($h_{ij}$) both for the decorrelation ($C_{ij}$) and for the sequence reconstruction.

**10.** Method for determining the transmission properties of the two transmission channel sections (H1, H2) resulting from establishing any chosen point (4) along a telephone two-wire line (1) in operation, in particular for a method according to claim 1, if the data arising during operation have previously known features of structure and content, **characterised by** the following method steps:

- connecting a monitor (5) to the telephone line (1) at the any chosen point (4), without noticeably influencing the properties of the telephone line (1);
- measuring and registering the course of voltage and current ($U_M$, $I_M$) on the telephone line at this point (4) by the monitor (5);
- filtering out signal courses associated with the portions of the data whose content is previously known on the basis of the previously known structure;
- using a parametricised model of the transmission channel sections (H1, H2) as a basis; and
- determining the transmission channel model parameters ($h_{ij}$) of the transmission channel sections (H1, H2) by relating the registered signal courses ($U_M$, $I_M$) to the previously known features of the data.

11. Method according to claim 10, **characterised in that** the scrambled user data are filtered out and the unscrambled, distorted synchronisation words are further used if the data (11, 12, 13) fed in to the telephone line on both sides in a predetermined frame structure each consist of user data (12, 13) scrambled into a quasi random sequence with a known spectrum and an unscrambled synchronisation word (11).

12. Method according to claim 2 or 11, **characterised in that** the scanned signal course of the filtered out, unscrambled, distorted synchronisation word is subjected to a Fourier transformation as an output sequence and the signal shape of the synchronisation word presupposed as known is subjected to a Fourier transformation as an input sequence scanned in the same rhythm and from these the properties of the transmission channel sections ($h_{ij}$) are determined.

13. Device for carrying out the method for extracting data on a two-wire telephone line according to patent claim 1, wherein the data are exchanged in full duplex operation and have previously known features of structure and content and extraction takes place at any chosen point of the digital two-wire telephone line, by which the two-wire telephone line is divided into two transmission channel sections, **characterised by**

- a monitor (5) connectable to the telephone line (1) with a high-ohm voltage and a low-ohm current tap, which measures and registers the course of current ($I_M$; $y_2$) and voltage ($U_M$, $y_1$) ;
- a filter, which on the basis of the previously known features of the data determines the signal shapes at the measuring point (4) which correspond to the known part of the signal shape fed in on both sides;
- an estimating device for determining transmission channel model parameters ($h_{ij}$) from the known and the determined signal shapes while using a parametricised model of the transmission channel sections (H1, H2) as a basis; and
- a decider (34; 51, 52; 61, 62) which uses the transmission channel model parameters ($h_{ij}$) for the decision, in order continuously to derive estimated values ($^x_1$, $^x_2$) for the originally sent data ($U_1$, $U_2$; $x_1$, $x_2$) from the registered course of current ($I_M$; $y_2$) and voltage ($U_M$, $y_1$).

14. Device according to claim 13, **characterised in that** the estimating device in each case subjects the determined signal shapes and the associated known signal shape to a fast Fourier transformation, divides the results in each case and transforms the results back, which gives rise to the transmission channel model parameters ($h_{ij}$).

15. Device according to claim 13, **characterised by** a decorrelator ($C_{ij}$) which divides the superimposed signal courses ($y_1$, $y_2$) supported on the transmission channel model parameters ($h_{ij}$) into signal courses ($^z_1$, $^z_2$) separated according to direction and a decider (34; 51, 52) which independently derives for each of the separate signal courses ($^z_1$, $^z_2$) the estimated values ($^x_1$, $^x_2$) for the originally sent data ($U_1$, $U_2$; $x_1$, $x_2$).

16. Device according to claim 15, **characterised by** a decider (34) in the form of a reduced Viterbi detector (51) with internal feedback of provisional decisions ($\underline{\sim x}$) via an inter-symbol interference generator (52).

17. Device according to claim 13, **characterised by** a two-channel, reduced Viterbi detector (61) with internal feedback of provisional decisions ($\underline{\sim x}_1$), ($\underline{\sim x}_2$) via an inter-symbol interference generator (62).

## Revendications

1. Procédé pour extraire des données sur une ligne téléphonique bifilaire, lorsque les données sont échangées sous forme numérique en mode duplex et qu'elles présentent des caractéristiques connues quant à leur structure et contenu et que l'extraction a lieu à un endroit quelconque de la ligne téléphonique bifilaire numérique par lequel la ligne téléphonique bifilaire est divisée en deux sections de canaux de transmission, **caractérisé par** les étapes de procédé consistant à :

- brancher un moniteur (5) sur la ligne téléphonique (1) à un endroit quelconque (4), sans influencer de manière perceptible les propriétés de la ligne téléphonique (1) ;
- mesurer et enregistrer avec le moniteur (5) l'allure de la tension et du courant ($U_M$, $I_M$) sur la ligne téléphonique à l'endroit (4) ;
- extraire par filtrage les allures des signaux appartenant aux parties des données au contenu déjà connu en raison de la structure déjà connue ;
- poser les bases d'un modèle paramétré des sections de canaux de transmission (H1, H2) ;
- déterminer les paramètres de modélisation des canaux de transmission ($h_{ij}$) des sections des canaux de transmission (H1, H2) en établissant un rapport entre les allures des signaux enregistrées ($U_M$, $I_M$) et les caractéristiques déjà connues des données ; et
- traiter les allures des signaux ($U_M$, $I_M$) en temps réel en tenant compte des paramètres déterminés des sections des canaux de transmission (H1, H2) et reconstruire les données envoyées à l'origine avec les moyens de la théorie de la décision.

2. Procédé selon la revendication 1, **caractérisé par** une extraction par filtrage des mots de synchronisation hachés et déformés et la détermination des paramètres de modélisation des canaux de transmission ($h_{ij}$) des sections des canaux de transmission en analysant les distorsions dans les formes des signaux des mots de synchronisation pour le cas que les données (11, 12, 13), avec une structure de trame prédéfinie, injectées aux deux extrémités de la ligne téléphonique, se composent chacune d'un mot de synchronisation (11) non haché et de données utiles (12, 13) hachées pour former une suite quasi aléatoire avec un spectre connu.

3. Procédé selon la revendication 1 ou 2, **caractérisé en ce que** les allures des signaux ($U_M$, $I_M$; $y_1$, $y_2$) sont soumises à une reconstruction de séquence combinée pour les données d'entrée des deux côtés, laquelle reconstruction tient compte de l'influence de la ligne en raison des paramètres de modélisation des canaux de transmission ($h_{ij}$).

4. Procédé selon la revendication 3, **caractérisé en ce que** la reconstruction de séquence se fait par le biais d'un détecteur de Viterbi réduit (61) en liaison avec une rétroaction interne de décision.

5. Procédé selon la revendication 4, **caractérisé en ce qu'**une estimation permanente d'erreurs dans le détecteur de Viterbi réduit (61) sert d'adaptation des paramètres de modélisation (68), laquelle délivre des valeurs d'ajustage (59) pour les paramètres de modélisation des canaux de transmission ($h_{ij}$) dans le détecteur de Viterbi (61) et dans la rétroaction interne de décision.

6. Procédé selon la revendication 1 ou 2, **caractérisé en ce que** les allures des signaux superposés ($y_1$, $y_2$) sont séparées à l'aide d'un dispositif de décorrélation ($c_{ij}$) sur la base des paramètres de modélisation des canaux de transmission ($h_{ij}$) en des allures de signaux ($\hat{z}_1$, $\hat{z}_2$) réparties selon le sens et sont soumises chacune à une reconstruction de séquence.

7. Procédé selon la revendication 6, **caractérisé en ce que** la reconstruction de séquence pour chacune des deux allures de signaux ($\hat{z}_1$, $\hat{z}_2$) réparties selon le sens se fait par le biais d'un filtre (36) réduisant la réponse impulsionnelle du canal et d'un détecteur (37) monté derrière le filtre.

8. Procédé selon la revendication 6, **caractérisé en ce que** la reconstruction de séquence pour chacune des deux allures de signaux ($\hat{z}_1$, $\hat{z}_2$) réparties selon le sens se fait par le biais d'un détecteur de Viterbi réduit (51) en liaison avec une rétroaction interne de décision.

9. Procédé selon la revendication 6, 7 ou 8, **caractérisé en ce qu'**une estimation d'erreurs permanente à partir des deux reconstructions de séquence sert d'adaptation des paramètres de modélisation (58), laquelle délivre des valeurs d'ajustage (59) pour les paramètres de modélisation des canaux de transmission ($h_{ij}$), pour la décorrélation ($c_{ij}$) et également pour les reconstructions de séquence.

10. Procédé pour déterminer au cours du fonctionnement les propriétés de transmission des sections des canaux de transmission (H1, H2) formées deux par le choix d'un point quelconque (4) le long d'une ligne téléphonique bifilaire (1) en service, en particulier pour un procédé selon la revendication 1, lorsque les données survenant au cours du fonctionnement présentent des caractéristiques déjà connues quant à leur structure et contenu, **caractérisé par** les étapes de procédé suivantes consistant à :

- brancher un moniteur (5) sur la ligne téléphonique (1) à un endroit quelconque (4), sans influencer de manière perceptible les propriétés de la ligne téléphonique (1) ;
- mesurer et enregistrer avec le moniteur (5) l'allure de la tension et du courant ($U_M$, $I_M$) sur la ligne téléphonique à l'endroit (4) ;
- extraire par filtrage les allures des signaux appartenant aux parties des données au contenu déjà connu en raison de la structure déjà connue ;
- poser les bases d'un modèle paramétré des sections de canaux de transmission (H1, H2) ;
- déterminer les paramètres de modélisation des canaux de transmission ($h_{ij}$) des sections des canaux de transmission (H1, H2) en établissant un rapport entre les allures de signaux enregistrées ($U_M$, $I_M$) et les caractéristiques déjà connues des données.

11. Procédé selon la revendication 10, **caractérisé en ce que** les données utiles hachées sont éliminées par filtrage et que les mots de synchronisation non hachés et déformés continuent d'être employés lorsque les données (11, 12, 13), avec une structure de trame prédéfinie, injectées aux deux extrémités de la ligne téléphonique se composent chacune d'un mot de synchronisation (11) non haché et de données utiles (12, 13) hachées pour former d'une suite quasi aléatoire avec un spectre connu.

12. Procédé selon la revendication 2 ou 11, **caractérisé en ce que** l'allure du signal échantillonné du mot de synchronisation filtré, non haché et déformé, en tant que séquence de sortie, et la forme supposée connue du signal du mot de synchronisation en tant que séquence d'entrée échantillonnée avec la même période, sont soumises à une transformation de Fourier et que les caractéristiques des sections des canaux de transmission ($h_{ij}$) en sont déduites.

13. Dispositif pour réaliser le procédé d'extraction de données sur une ligne téléphonique bifilaire selon la revendication 1, les données étant échangées en mode duplex et présentant des caractéristiques connues quant à leur structure et contenu, et l'extraction ayant lieu à un endroit quelconque de la ligne téléphonique bifilaire, par lequel la ligne téléphonique bifilaire est séparée en deux sections de canaux de transmission, **caractérisé par**

- un moniteur (5), pouvant être branché sur la ligne téléphonique (1), avec une prise de tension à haute impédance et une prise de courant à faible impédance, qui mesure et enregistre l'allure du courant ($I_M$; $y_2$) et de la tension ($U_M$, $y_1$) ;
- un filtre qui, en raison des caractéristiques déjà connues des données, détermine les formes des signaux au point de mesure (4), lesquelles correspondent à la partie connue de la forme de signal injectée de chaque côté ;
- un dispositif d'estimation pour déterminer les paramètres de modélisation des canaux de transmission ($h_{ij}$) à partir de formes de signaux connues et déterminées en se basant sur un modèle paramétré des sections des canaux de transmission (H1, H2); et
- un décideur (34; 51, 52; 61, 62) qui utilise les paramètres de modélisation des canaux de transmission ($h_{ij}$) pour la décision afin de déduire en permanence les valeurs estimées ($^x_1$, $^x_2$,) pour les données émises à l'origine ($U_1$, $U_2$; $x_1$, $x_2$) à partir de l'allure enregistrée du courant ($I_M$; $Y_2$) et de la tension ($U_M$, $y_1$).

14. Dispositif selon la revendication 13, **caractérisé en ce que** le dispositif de décision soumet les formes de signaux déterminées et la forme de signal connue correspondante à une transformée de Fourier rapide, divise chaque résultat et effectue une transformée inverse des résultats, ce qui donne les paramètres de modélisation des canaux de transmission ($h_{ij}$).

15. Dispositif selon la revendication 13, **caractérisé par** un dispositif de décorrélation ($c_{ij}$) qui, à l'aide des paramètres de modélisation des canaux de transmission ($h_{ij}$), sépare les allures de signaux superposées ($y_1$, $y_2$) en des allures de signaux ($^z_1$, $^z_2$) réparties selon le sens, et par un décideur (34; 51, 52) qui déduit indépendamment pour chacune des allures de signaux réparties ($^z_1$, $^z_2$) les valeurs estimées ($^x_1$, $^x_2$) pour les données émises à l'origine ($u_1$, $u_2$; $x_1$, $x_2$).

16. Dispositif selon la revendication 15, **caractérisé par** un décideur (34) sous la forme d'un détecteur de Viterbi réduit (51) avec rétroaction interne de décisions provisoires ($\underaccent{\sim}{x}$) via un générateur de brouillage entre symboles (52).

**17.** Dispositif selon la revendication 13, **caractérisé par** un détecteur de Viterbi (61) réduit et à deux canaux, avec rétroaction interne de décisions provisoires ($\sim\underline{x}_1$), ($\sim\underline{x}_2$) par le biais d'un générateur de brouillage entre symboles (62).

Fig. 1

Fig. 2

Fig. 3

Fig. 4

Fig. 5

Fig. 6

Fig. 7

Fig. 8

Fig. 9